# FASCICULE DE BREVET EUROPEEN

(11) **EP 3 615 300 B1**
(45) Date de publication et mention de la délivrance du brevet: **13.01.2021**
(21) Numéro de dépôt: 18725282.0
(22) Date de dépôt: 24.04.2018
(51) Int. Cl.: B29C 51/16, B29C 33/14, B29C 33/12

(54) **DISPOSITIF POUR FABRIQUER DES RÉCIPIENTS POURVUS DE BANDEROLES DE DÉCOR**
VORRICHTUNG ZUR HERSTELLUNG VON MIT ZIERHÜLLEN VERSEHENEN BEHÄLTERN
DEVICE FOR PRODUCING CONTAINERS PROVIDED WITH DECORATIVE WRAPPERS

(30) Priorité: 26.04.2017 FR 1753642
(43) Date de publication de la demande: 04.03.2020
(73) Titulaire: ERCA, 91940 Les Ulis (FR)
(72) Inventeur: LARGERIE, Michel, 08818 Olivella (Barcelone) (ES)
(74) Mandataire: Cabinet Beau de Loménie
(86) Numéro de dépôt international: PCT/FR2018/051030
(87) Numéro de publication internationale: WO 2018/197806

(56) Documents cités:
- DE-A1- 2 703 327
- FR-A1- 2 499 899
- FR-A1- 2 793 185
- JP-A- H0 550 531

## Description

Le présent exposé concerne un dispositif pour fabriquer des récipients pourvus de banderoles de décor, le dispositif comprenant au moins un ensemble de formage et de banderolage apte à adopter une configuration active dans laquelle ledit ensemble présente une chambre de formage et une chambre d'enroulement, alignées axialement et communiquant par un passage annulaire formé au fond de la chambre de formage, l'ensemble de formage et de banderolage comprenant un organe pousseur configuré pour repousser dans la chambre de formage, à travers le passage annulaire, une banderole enroulée dans la chambre d'enroulement.

Les dispositifs de ce type sont connus, par exemple par les documents FR 2 793 185 ou FR 2 839 465. Dans ces dispositifs, pour chaque ensemble de formage et de banderolage, la chambre d'enroulement est disposée sous la chambre de formage et communique avec elle par le fond de cette chambre de formage. Une banderole peut donc être enroulée dans la chambre d'enroulement, en temps masqué, c'est-à-dire pendant le formage d'un corps de récipient dans la chambre de formage située au-dessus, dans laquelle une banderole préalablement disposée dans la chambre d'enroulement a été transférée. A la fin du formage du corps du récipient pourvu de cette banderole, une autre banderole se trouve donc en attente dans la chambre d'enroulement. Le corps de récipient est ensuite démoulé de la chambre de formage et, dans le même temps, la banderole en attente est mise en position dans la chambre de formage pour adhérer au corps d'un nouveau récipient devant être formé dans cette chambre de formage. Ces dispositifs donnent globalement satisfaction et ont fait l'objet de différents perfectionnements et variantes concernant l'enroulement et le positionnement de la banderole dans la chambre d'enroulement puis dans la chambre de formage. En particulier, le document FR 2 793 185 s'intéresse au séquencement de l'enroulement, du transfert et du formage, pour assurer un travail en temps masqué, tandis que le document FR 2 839 465 préconise l'utilisation d'une roue d'entraînement pour favoriser le bon enroulement de la banderole dans la chambre d'enroulement.

En général, une fois que la banderole est arrivée dans la bonne position dans la chambre de formage, elle peut être maintenue dans cette position, par exemple par une aspiration qui la plaque contre la paroi latérale de cette chambre. La difficulté est cependant d'amener la banderole dans la position souhaitée dans la chambre de formage.

Lorsque cette chambre de formage présente une forme cylindrique, à dimensions diamétrales constantes, il est classique d'introduire la banderole par le fond de cette chambre et, à l'aide de moyens de transfert déplacés en translation verticale, de pousser cette banderole jusqu'à ce qu'elle parvienne dans la position souhaitée.

En revanche, si la chambre de formage est évasée, c'est-à-dire qu'elle présente au moins une portion dans laquelle ses dimensions diamétrales vont en augmentant à partir de son fond, il est délicat de mettre la banderole en place à partir du fond de la chambre.

Notamment pour cette raison, d'autres dispositifs existent, dans lesquels la banderole est mise en place dans la chambre de formage par l'ouverture de formage opposée au fond de cette chambre. Un tel dispositif est en particulier décrit dans le document FR 2 965 506. Pour pouvoir fonctionner en temps masqué, il utilise un moule basculant et comprenant au moins deux séries de chambres de formage, de sorte que les banderoles peuvent être insérées par les ouvertures de formage d'une série de chambres de formage, alors en position basculée, tandis que les chambres de formage de l'autre série servent au formage de récipients. Ceci permet de pousser une banderole dans chaque chambre de formage en poussant la banderole par l'ouverture de formage (c'est-à-dire l'ouverture par laquelle doit être introduit le piston de formage), jusqu'à ce que le bord arrière de la banderole, le plus proche du fond de la chambre de formage, ait atteint la position souhaitée. Ainsi, lorsque seul le fond de la chambre de formage est évasé, on peut sans difficulté introduire la banderole par l'ouverture de formage en la maintenant dans la portion cylindrique de cette chambre, située entre cette portion évasée et l'ouverture de formage, c'est-à-dire que le bord arrière de la banderole se trouve sensiblement au niveau où se termine la portion évasée.

Ce dispositif donne également satisfaction, mais il est quelque peu complexe puisqu'il nécessite de fabriquer et d'utiliser plusieurs séries de chambres de formage et de cadencer le formage avec le basculement de ces séries de chambres.

Le document DE 2 703 327 divulgue un dispositif selon le préambule de la revendication 1.

La présente invention vise à améliorer encore l'état de la technique précité, en proposant un dispositif simple permettant de disposer une banderole dans une chambre de formage ayant au moins une portion évasée.

Ainsi, le présent exposé concerne un dispositif pour fabriquer des récipients pourvus de banderoles de décor, le dispositif comprenant au moins un ensemble de formage et de banderolage apte à adopter une configuration active dans laquelle ledit ensemble présente une chambre de formage et une chambre d'enroulement, alignées axialement et communiquant par un passage annulaire formé au fond de la chambre de formage, ce fond étant opposé à une ouverture de formage de la chambre de formage, l'ensemble de formage et de banderolage comprenant un organe pousseur configuré pour repousser dans la chambre de formage, à travers le passage annulaire, une banderole enroulée dans la chambre d'enroulement; dans ce dispositif, au moins une portion de la chambre de formage est évasée en s'éloignant du fond vers l'ouverture de formage et l'organe pousseur est configuré pour s'expanser radialement en repoussant la banderole dans ladite portion évasée de la chambre de formage.

A l'issue de l'enroulement de la banderole dans la chambre d'enroulement, le bord inférieur de cette banderole est porté par l'organe pousseur. Le transfert de la banderole dans la chambre de formage s'opère lors d'un déplacement en translation relative entre l'organe pousseur et la chambre de formage, à l'occasion duquel la banderole est poussée dans la chambre de formage à travers le passage annulaire. Ce passage annulaire est prévu au fond de la chambre de formage, à l'opposé de l'ouverture de formage qui est prévue pour le passage d'un piston de thermoformage. Au début de ce déplacement relatif, l'organe pousseur se trouve dans la région du fond de la chambre de formage de petites dimensions diamétrales et définit donc lui-même des petites dimensions diamétrales. Lors de la translation relative précitée, l'organe pousseur parvient progressivement dans la portion évasée de la chambre de formage, dont les dimensions diamétrales vont en augmentant en s'éloignant du fond, et, du fait de son expansion, il définit lui-même des dimensions diamétrales qui vont en augmentant.

Par exemple, pour repousser la banderole dans la chambre de formage, l'organe pousseur présente une surface de poussée transversale à l'axe d'alignement de la chambre de formage et de la chambre d'enroulement, cette surface étant configurée pour porter un bord de la banderole. Ce bord se trouve dans un plan transversal à l'axe d'alignement. En particulier, cette surface de poussée est formée sur l'extrémité supérieure de l'organe de poussée, sur laquelle repose le bord inférieur de la banderole.

Au fur et à mesure qu'il pénètre dans la portion évasée de la chambre de thermoformage, l'organe pousseur s'expanse, c'est-à-dire que les dimensions diamétrales de la surface de poussée qu'il définit, portant la banderole, augmentent par rapport aux dimensions que présentait cette même surface de poussée alors qu'il était encore en dehors de la chambre de thermoformage. En avançant dans la portion évasée de la chambre de thermoformage, l'organe pousseur passe donc dans une configuration expansée ; il retourne à sa configuration rétractée lorsqu'il ressort de cette chambre.

Ainsi, le bord inférieur de la banderole est porté par l'organe pousseur, sans risque de se coincer entre ce dernier et la paroi latérale de la chambre de formage, puisque l'expansion de l'organe pousseur permet d'éviter de créer un interstice annulaire entre le bord latéral externe de cet organe et la paroi latérale de la chambre de formage.

Optionnellement, l'organe pousseur comprend un moyen élastique sollicitant en permanence ledit organe pousseur dans le sens de son expansion radiale et, dans la configuration active de l'ensemble de formage et de banderolage, ledit organe pousseur est contraint en compression radiale par la paroi latérale de la chambre d'enroulement à l'encontre de l'effet de rappel dudit moyen élastique.

Optionnellement, l'ensemble de formage et de banderolage comprend un noyau conformateur qui porte l'organe pousseur et qui, dans la configuration active, délimite un espace annulaire d'enroulement avec la paroi en regard de la chambre d'enroulement, le noyau conformateur et la paroi latérale de la chambre de formage étant aptes à être déplacés axialement l'un par rapport à l'autre pour repousser la banderole dans la chambre de formage.

Optionnellement, l'organe pousseur comprend une bague expansible, qui comprend par exemple un anneau fendu.

Optionnellement, l'organe pousseur comprend une pluralité de doigts pousseurs.

Optionnellement, les doigts pousseurs sont portés par un support commun en étant aptes à se déplacer radialement par rapport audit support commun.

Optionnellement, les doigts pousseurs sont montés pivotants sur le support commun.

Optionnellement, les doigts pousseurs coopèrent avec des ressorts sollicitant lesdits doigts radialement vers l'extérieur.

Optionnellement, dans le cas où l'ensemble de formage et de banderolage comprend un noyau conformateur, les doigts pousseurs sont portés par le noyau conformateur.

Optionnellement, au moins l'un des éléments comprenant l'organe pousseur et le passage annulaire présente une rampe de rentrée apte, lorsque l'organe pousseur coopère avec le bord radial externe dudit passage annulaire à l'occasion d'un déplacement relatif de l'organe pousseur et de la paroi de la chambre de formage en sens opposé au sens de poussée de la banderole dans la chambre de formage, à solliciter ledit organe pousseur à l'encontre de son expansion.

On comprend que le dispositif selon le présent exposé est particulièrement simple puisque, lors de la poussée d'une banderole dans la chambre de formage, l'organe pousseur subit une expansion qui évite les coincements de la banderole et assure le bon positionnement du bord inférieur de cette banderole jusqu'à la position souhaitée dans la chambre de formage. L'expansion de l'organe pousseur lors de la poussée d'une banderole, ainsi que la rétractation de l'organe pousseur dans un mouvement inverse peuvent être automatiques. L'organe pousseur peut être formé par un seul élément, en particulier une bague expansible, ou bien par plusieurs éléments, par exemple des doigts pousseurs, ainsi qu'il a été évoqué.

Le présent exposé sera bien compris à la lecture de la description détaillée qui suit, qui se réfère, à titre d'exemples de réalisation, aux dessins annexés sur lesquels :
- la figure 1 est une vue générale d'une installation de thermoformage de récipients, de remplissage et de scellage de ces récipients ;
- la figure 2 est une vue schématique en coupe dans le plan II-II de la figure 1, montrant l'organisation du dispositif d'enroulement de banderoles devant être transférées dans les chambres de thermoformage, pour banderoler des récipients thermoformés dans ces chambres ;
- les figures 3A et 3B montrent, pour un dispositif d'enroulement, deux états successifs dans une coupe correspondant à celle de la figure 2;
- les figures 4A à 4E montrent, dans cinq états successifs, un ensemble de formage et de banderolage, dans une coupe correspondant au plan IV-IV de la figure 3A ;
- la figure 5 est une vue correspondant à la figure 4D, pour une variante de l'ensemble de formage et de banderolage ;
- la figure 6 est une vue de détail du dispositif de la figure 5 ;
- la figure 7 est une vue en coupe dans le plan VII-VII de la figure 6;
- la figure 8 illustre, dans une vue prise selon la flèche VIII de la figure 3B, montrant en perspective schématique une partie du mécanisme d'amenée et de découpe d'une bandelette pour former une banderole ;
- la figure 9 est une vue analogue à la figure 8, pour une variante de réalisation ; et
- les figures 10 et 11 sont des coupes, respectivement dans les plans X-X et XI-XI de la figure 9.

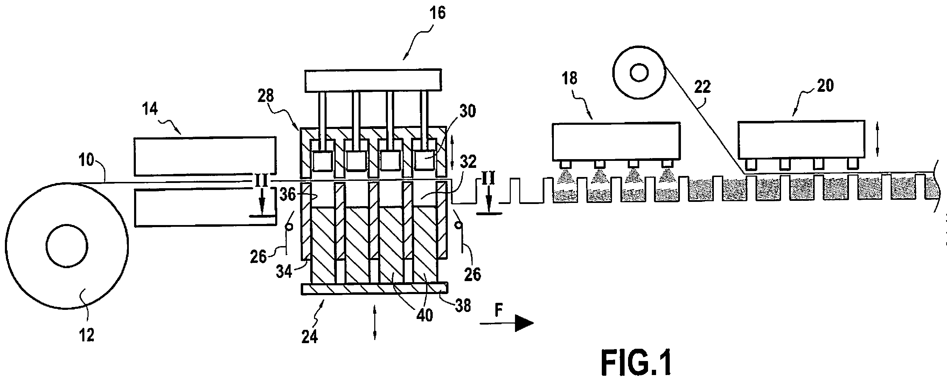

L'installation représentée sur la figure 1 comprend plusieurs stations au travers desquels est entraînée pas à pas une bande 10 en matériau thermoplastique, dévidée à partir d'une bobine 12. Considérée successivement dans le sens F d'avancement de la bande, l'installation comprend une station 14 de chauffage, une station 16 de thermoformage de récipients, une station 18 de remplissage des récipients thermoformés et une station 20 de fermeture de ces récipients par scellement d'une bande de fermeture 22 au travers de leurs ouvertures.

La station de thermoformage 16 comprend, de manière connue en soi, un poste 24 de chambres de thermoformage et de chambres d'enroulement de banderoles (formées dans des bandelettes 26) dans les chambres de thermoformage, ainsi qu'un bloc 28 de pistons de thermoformage 30, déplaçables en va-et-vient dans ces chambres.

Dans le présent exposé, on considérera, à titre d'exemple, que le plan d'entrainement de la bande 10 est horizontal et que le bloc 28 de pistons de thermoformage est situé au-dessus de ce plan, tandis que le bloc de moule est situé en-dessous, de sorte que le déplacement de thermoformage des pistons s'opère verticalement et vers le bas. On fera ainsi référence, par simplicité, à la direction verticale pour désigner la direction de thermoformage. De même, les qualificatifs "au-dessus" et "en-dessous", "supérieur" et "inférieur" s'apprécient par rapport au sens de thermoformage. Il ne s'agit bien entendu que d'un exemple, le thermoformage pouvant s'opérer verticalement vers le haut si le bloc de moule est au-dessus du bloc de pistons ou dans d'autres directions, selon la direction d'alignement de ces deux blocs. Par ailleurs, les qualificatifs "'intérieur" et "extérieur" doivent s'apprécier par rapport à l'axe de thermoformage, un élément intérieur étant plus proche de cet axe qu'un élément extérieur.

Le poste 24 comprend un bloc de moule 34 dans lequel sont formées des rangées de chambres de thermoformage 36. Pour le thermoformage, les pistons 30 se déplacent dans les chambres de thermoformage 36 et y repoussent la matière thermoplastique de la bande 10 précédemment chauffée dans la station 14. En l'espèce, la bande 10 étant déplacée horizontalement et les pistons 30 étant disposés au-dessus de cette bande, les chambres de thermoformage 36 sont formées en partie haute du bloc de moule 34. Le poste 24 comprend également un bloc de mandrins d'enroulement 38 portant autant de mandrins d'enroulement 40 que le bloc de moule 34 comprend de chambres de thermoformage, un mandrin étant disposé dans chaque chambre de thermoformage à partir de l'extrémité inférieure du bloc de moule 34. Chaque mandrin d'enroulement forme un noyau conformateur autour duquel une banderole peut être enroulée.

Les extrémités des bandelettes 26 sont amenées dans les chambres d'enroulement, et découpées et enroulées dans ces chambres autour des mandrins d'enroulement 40 pour former des banderoles. Ces banderoles sont ensuite transférées dans les chambres de thermoformage 36 par un déplacement en translation du bloc de moule 34 par rapport aux mandrins d'enroulement 40. Par exemple, ces mandrins ne se déplacent pas en translation, tandis que le bloc de moule 34 est déplaçable verticalement en va et vient entre une position haute de thermoformage et une position basse de démoulage.

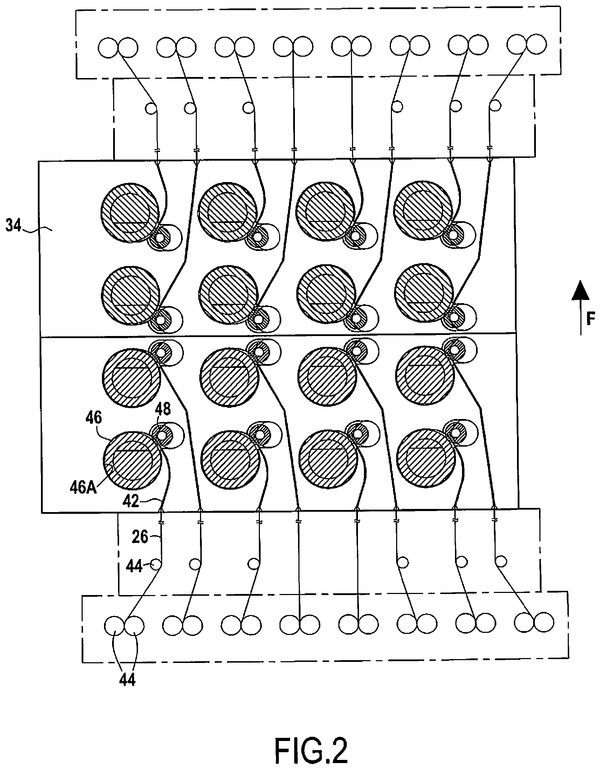

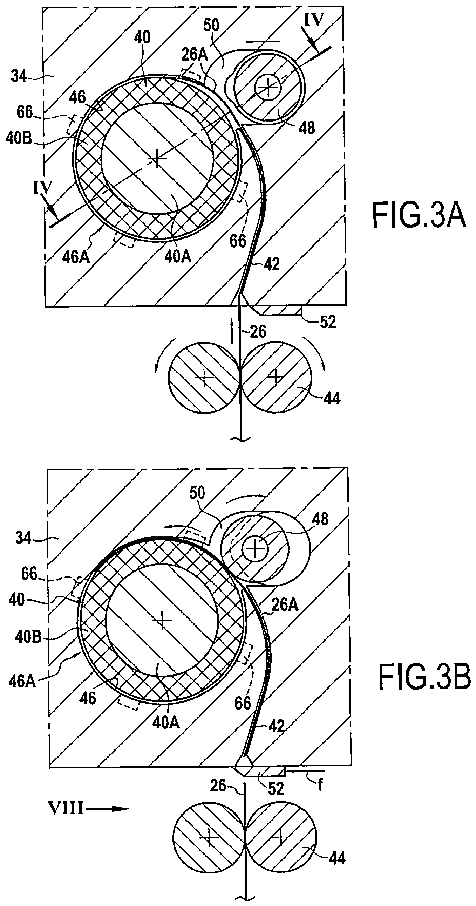

En référence aux figures 2, 3A et 3B, on décrit maintenant l'enroulement de banderoles dans les chambres d'enroulement situées en partie basse du bloc de moule 34. En l'espèce, ce bloc 34 comprend quatre rangées d'ensembles d'une chambre de formage 36 (voir figure 1) et d'une chambre d'enroulement 46 superposées, ces quatre rangées étant disposées successivement dans le sens F d'avancement de la bande thermoplastique. Pour chaque chambre d'enroulement 46, une bandelette 26 est amenée à une fente 42 d'entrée dans la chambre d'enroulement en étant entraînée par des galets d'entraînement 44. L'extrémité avant de la bandelette 26, poussée par les galets 44, est poussée dans la fente 42 jusqu'à parvenir à la chambre d'enroulement proprement dite 46. Dans l'exemple représenté, le dispositif d'enroulement comprend, pour chaque chambre d'enroulement 46, un mandrin 40 disposé dans la chambre 46 de manière à définir avec elle un espace annulaire 46A dans lequel pourra s'enrouler la banderole.

Comme dans le document FR 2 839 465, le dispositif comprend en l'espèce une roue d'entraînement 48 disposée dans un espace latéral 50 communiquant avec la chambre d'enroulement 46. Cette roue d'entraînement 48 a un axe de rotation vertical, la direction verticale étant celle du déplacement des pistons de thermoformage et celle dans laquelle s'étend le mandrin d'enroulement 40.

Comme on le voit sur la figure 3A, lors de l'introduction de l'extrémité avant 26A d'une bandelette 26 dans une chambre d'enroulement 46, la roue d'entraînement 48 est d'abord écartée du mandrin d'enroulement 40, jusqu'à ce que l'extrémité libre de cette portion d'extrémité avant 26A ait été suffisamment poussée dans la fente 42 pour dépasser la roue d'entraînement 48. Lorsque la longueur souhaitée de bandelette a été introduite dans la fente 42 et la chambre 46, un couteau 52 est actionné pour venir découper la bandelette, la portion avant 26A formant ainsi un tronçon qui, une fois enroulé, constituera une banderole.

Sur la figure 3B, la roue d'entraînement 48 s'est déplacée de manière à se rapprocher du mandrin d'enroulement 40, jusqu'à pincer la portion d'extrémité 26A de bandelette entre ce mandrin et cette roue d'entraînement. La roue d'entraînement est entraînée en rotation de manière à enrouler le tronçon de bandelette autour du mandrin d'enroulement 40. Ce mandrin 40 peut être stationnaire et présenter une surface anti-friction favorisant la progression du tronçon de bandelette. Le mandrin 40 peut également, comme dans l'exemple représenté, comporter un noyau stationnaire 40A autour duquel est disposée une bague 40B montée folle en rotation. Ainsi, la rotation de la roue d'entraînement 48 favorise la rotation de la bague 40B et l'enroulement du tronçon de bandelette.

Globalement, le dispositif de roue d'entraînement 48 et sa séquence d'utilisation peuvent être du type décrit dans la demande de brevet FR 2 839 465, à laquelle il peut être fait référence pour compléter le présent exposé.

Il doit cependant être entendu que d'autres moyens d'enroulement de banderoles dans les chambres d'enroulement peuvent être prévus sans sortir du cadre du présent exposé, par exemple sans mandrins d'enroulement ou sans roue d'entraînement.

Par ailleurs, la figure 1 illustre un thermoformage à partir d'une bande de matériau thermoplastique entraînée en pas à pas, mais il doit être entendu que le présent exposé est également valable pour une fabrication par thermoformage, ou plus généralement, par formage, à partir de jetons ou plaquettes correspondant chacun à un récipient ou à un groupe de récipients.

Dans le présent exposé, on utilise indifféremment le terme "formage" ou "thermoformage", le thermoformage étant un exemple particulier du formage, réalisé dans une matière thermoplastique préalablement chauffée.

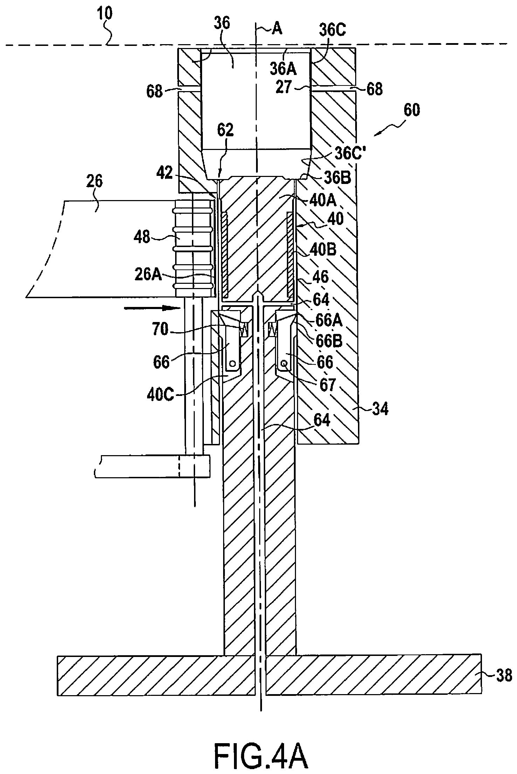

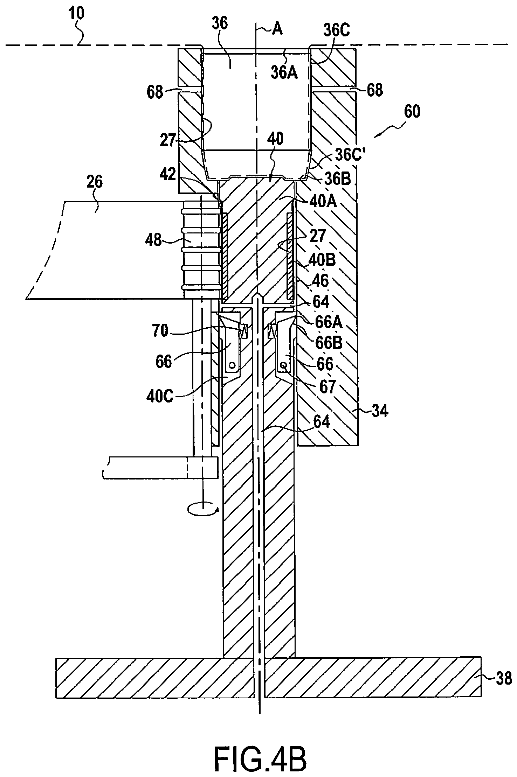

En référence aux figures 4A à 4E, on décrit maintenant un ensemble de formage et de banderolage 60, ainsi que sa séquence d'utilisation. Cet ensemble 60 comprend une chambre de thermoformage 36 et une chambre d'enroulement 46 formées dans le bloc 34 et alignées axialement selon l'axe du thermoformage A, qui est ici vertical. En l'espèce, le thermoformage s'opérant par déplacement des pistons de thermoformage vers le bas, la chambre d'enroulement 46 est disposée sous la chambre de thermoformage 36. La chambre de formage 36 présente une ouverture supérieure de formage 36A à travers laquelle peut se déplacer le piston de thermoformage pour repousser la matière thermoplastique 10, un fond 36B opposé à cette ouverture 36A et une paroi latérale 36C qui s'étend entre l'ouverture 36A et le fond 36B. En l'espèce, le fond 36B est délimité par la tête du mandrin 40 disposé dans la chambre d'enroulement 46. On voit que la chambre d'enroulement 46 communique avec la chambre de thermoformage 36 par un passage annulaire 62 qui est formé au fond de la chambre de thermoformage. La coupe de la figure 4A étant réalisé dans un plan axial comprenant un diamètre passant par l'axe de la roue d'entraînement 48, la paroi du bloc de moule 34 est interrompue à cet endroit. Sur la figure 4A, la roue d'entraînement 48 est en position écartée par rapport au mandrin d'enroulement 40. Le bloc 34 est dans sa position haute pour permettre le thermoformage d'un corps de récipient. Une banderole 27 préalablement découpée à l'extrémité de la bandelette 26 est présente dans la chambre de thermoformage 36. Au cours du thermoformage d'un corps de récipient dans la chambre 36 équipée de la banderole 27, la nouvelle extrémité de la bandelette 26 est poussée dans la fente 42 par les galets 44 précédemment évoqués. La roue d'entraînement 48 est donc alors écartée du mandrin d'enroulement 40. Sur la figure 4B, la roue d'entraînement 48 a été déplacée vers le mandrin d'enroulement 40 de manière à pincer cette nouvelle extrémité de bandelette contre ce mandrin. Ainsi, pendant le formage d'un récipient dans la chambre 36, la roue d'entraînement 48 peut être entraînée en rotation pour enrouler la nouvelle extrémité d'une bandelette dans la chambre d'enroulement 46. A l'issue des opérations simultanées de thermoformage et d'enroulement de la nouvelle extrémité d'une bandelette, un récipient muni d'une banderole se trouve donc thermoformé dans la chambre 36, tandis qu'une nouvelle banderole 27 se trouve en attente dans la chambre d'enroulement 46.

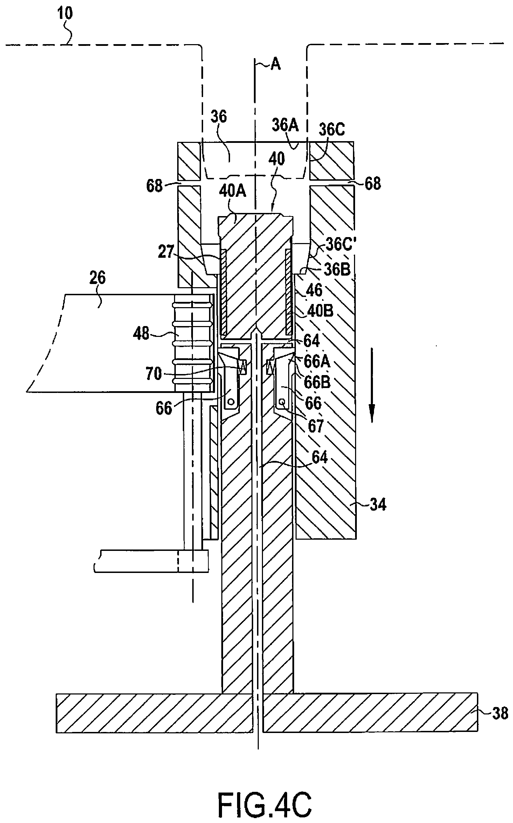

Il va alors s'agir d'opérer le démoulage du corps de récipient et le transfert de cette nouvelle banderole dans la chambre de thermoformage 36. Pour cela, le bloc 34 est déplacé de manière à s'écarter du plan de la bande thermoplastique 10, c'est-à-dire vers le bas, comme le montre la figure 4C. Bien entendu, la roue d'entraînement 48 a préalablement été écartée du mandrin d'enroulement 40.

Optionnellement, pour favoriser au cours de ce déplacement le maintien de la banderole 27 enroulée autour du mandrin d'enroulement 40, ce mandrin peut être équipé de canaux 64 reliés à une aspiration et débouchant sur sa paroi latérale, de telle sorte que la banderole en attente 27 peut être plaquée contre ce mandrin. Dans ce cas, la source d'aspiration a été activée pendant la descente du bloc de moule 34.

Le dispositif comprend des doigts pousseurs 66 qui, en l'espèce, sont portés par le mandrin 40, ce dernier constituant un exemple de support commun pour ces doigts pousseurs. En d'autres termes, le support commun peut être en une seule pièce avec le mandrin d'enroulement comme en l'espèce, ou bien être un élément dissocié de ce mandrin.

Pour le transfert de la banderole 27 dans la chambre de thermoformage 36, le déplacement relatif entre le mandrin d'enroulement 40 et cette chambre 36, opéré en l'espèce par une descente du bloc 34 alors que le mandrin est stationnaire, est effectué jusqu'à ce que la portion de paroi latérale 36C de la chambre 36 dans laquelle doit se trouver la banderole vienne au droit de la banderole 27 enroulée autour du mandrin 40.

Lors de ce déplacement relatif, les extrémités supérieures des doigts pousseurs 66 coopèrent avec le bord inférieur de la banderole 27 pour la pousser dans la position souhaitée dans la chambre de thermoformage 36. En l'espèce, cette chambre 36 présente une portion évasée 36C', dans laquelle les dimensions diamétrales de sa paroi latérale 36C augmentent en s'éloignant du fond. En l'espèce, vue en coupe dans un plan comprenant l'axe vertical A de la chambre, cette portion évasée 36C' forme une courbe légèrement arrondie jusqu'à se raccorder tangentiellement à la direction verticale.

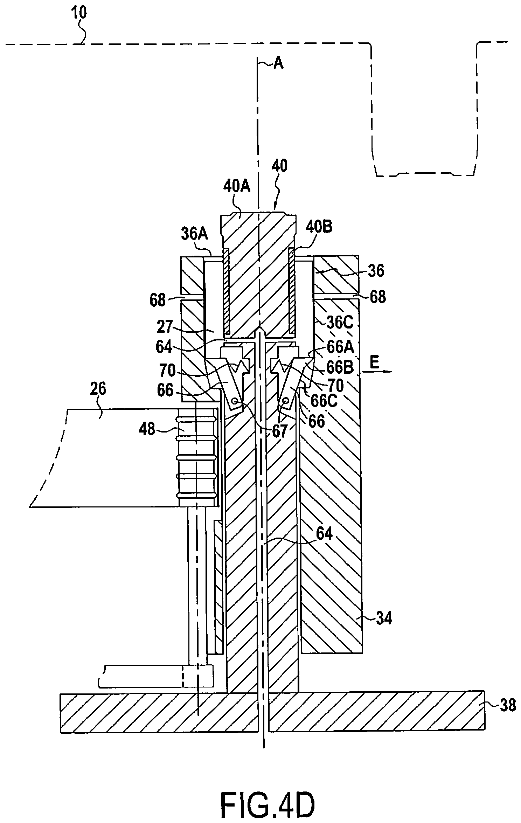

En comparant les figures 4C et 4D, on voit que les doigts pousseurs 66 sont configurés pour s'expanser radialement en repoussant la banderole 27 dans la portion évasée 36C' de la chambre de thermoformage 36. Plus précisément, les doigts pousseurs adoptent initialement une position rétractée, dans laquelle ils restent contraints lors d'une première phase de descente du bloc 34, par leur coopération avec la paroi de la chambre d'enroulement 46. Ainsi, les doigts 66 restent dans leur configuration rétractés pendant l'enroulement d'une banderole dans cette chambre 46 et le début du démoulage d'un récipient formé dans la chambre 36. Cependant, lorsque le bloc de moule 34 atteint le niveau bas dans lequel les extrémités supérieures des doigts se trouvent dans la portion évasée 36C' de la chambre de thermoformage 36, ces doigts viennent naturellement s'expanser en portant ainsi l'extrémité inférieure de la banderole 27 comme le montre la figure 4D.

Une fois que le bloc de moule 34 a atteint la position basse souhaitée, c'est-à-dire une fois que la banderole 26A a atteint le niveau souhaité à l'intérieur de la chambre 36, on déclenche un mouvement inverse du bloc de moule 34, qui va pouvoir remonter.

Le dispositif comprend optionnellement des canaux d'aspiration 68 qui débouchent dans la partie courante de la paroi latérale 36C de la chambre de thermoformage 36 dans laquelle se trouve la banderole 27. Lorsque l'aspiration par ces canaux est activée, la banderole est plaquée contre la paroi latérale 36C, ce qui est une façon possible de contribuer à maintenir la banderole en position lors de la remontée du bloc de moule 34.

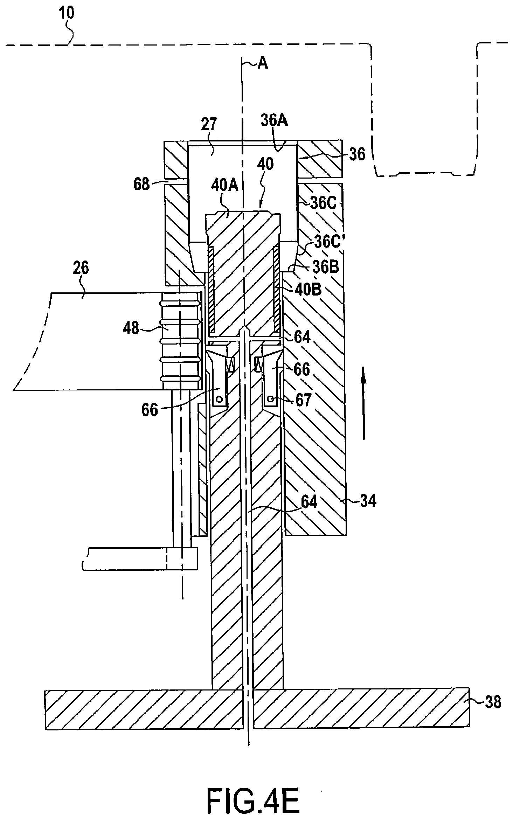

La figure 4E montre cette remontée du bloc de moule 34, entraînant la banderole 27 dans la chambre 36. Lors de ce déplacement vers le haut, les doigts 66 reprennent naturellement leur position rétractée.

Au sens du présent exposé, les doigts 66 constituent, considérés ensemble, un exemple d'organe pousseur. Ces doigts présentent des surfaces de poussée formées à leurs extrémités supérieures 66A sur lesquelles repose le bord inférieur de la banderole lorsqu'elle est repoussée par les doigts dans la chambre de formage.

On voit que, par des ressorts 70, les doigts pousseurs 66 sont sollicités en permanence dans le sens de leur expansion radiale. En l'espèce, chaque doigt pousseur est articulé, en étant monté pivotant sur le mandrin 40. Plus précisément, chaque doigt 66 est monté sur le mandrin 40 via un axe de pivotement 67 disposé à l'extrémité inférieure du doigt 66, l'axe de pivotement 67 étant en l'espèce horizontal. En revanche, les ressorts 70 sont disposés vers les extrémités supérieures 66A des doigts 66. En l'espèce, chaque doigt 66 est disposé dans un renfoncement 40C du mandrin 40 situé, en position haute du moule 34, sous la chambre d'enroulement 46. Les ressorts 70 sont disposés dans des creux formés au fond de ces renfoncements, de manière à coopérer avec les faces radialement internes des doigts pousseurs, c'est-à-dire leurs faces tournées vers l'axe A. Ainsi, le ressort coopérant avec chaque doigt tend à le repousser dans le sens E de son expansion radiale, par pivotement autour de l'axe 67.

Dans la position expansée, les extrémités supérieures 66A des doigts 66 dépassent radialement vers l'extérieur par rapport à la surface externe du mandrin 40. On voit que les surfaces latérales externes de ces doigts présentent, dans la région de leurs extrémités supérieures 56A, des rampes de rentrée 66B qui sont inclinées vers l'axe A en allant vers l'extrémité inférieure des doigts. Ainsi, lorsque le bloc 34 remonte à partir de la position basse représentée sur la figure 4D, ces rampes 66B coopèrent avec le bord externe du passage annulaire 62 formé au fond de la chambre 36 pour amener naturellement les doigts dans leur position rétractée.

On relève que les parties d'extrémité supérieure des doigts pousseurs 66 forment des becs dirigés vers l'extérieur, la face inférieure de ces becs formant les rampes de rentrée 66B précédemment évoquées. Cette forme de bec favorise le pivotement rapide des doigts dans le sens de leur expansion, dès que le fond 36B de la chambre de thermoformage parvient au niveau des doigts, lors de la descente du bloc de moule. La face supérieure de chaque doigt présente en effet une partie en surplomb au-dessus de la pointe du bec, qui peut parvenir au contact de la paroi latérale de la chambre de thermoformage, ou à proximité immédiate de cette dernière, alors que le basculement du doigt est limité par la coopération de la partie courante 66C de sa face externe, avec le bord externe du passage annulaire 62.

Sur les figures 4A à 4E, on a montré deux doigts 66 diamétralement opposés. Pour éviter les risques de basculement du bord inférieur de la banderole autour de la ligne diamétrale séparant ces deux doigts, il est intéressant de prévoir au moins trois doigts espacés angulairement, voire quatre doigts espacés angulairement. Il convient par ailleurs de relever que, pour la clarté du dessin, on a représenté la roue d'entraînement 48 et un doigt pousseur 66 dans l'interruption de la paroi du bloc de moule 34 et un deuxième doigt pousseur dans le plan de coupe. Cependant, comme on le voit sur les figures 3A et 3B, sur lesquelles les positions des doigts sont indiquées en traits interrompus, on évite de disposer un doigt dans la région dans laquelle la paroi du bloc de moule 34 est interrompue, afin que les doigts puissent être en appui continu contre la paroi de la chambre d'enroulement 46, tant qu'ils ne sont pas dans la chambre de thermoformage. Ainsi, les doigts 66 ne se trouvent pas dans le même plan de coupe que la roue d'entraînement 48.

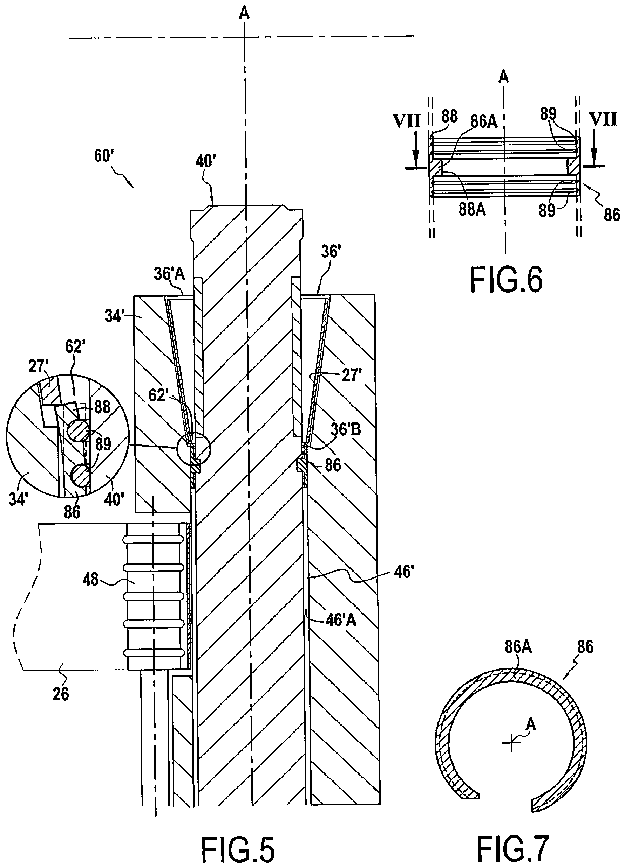

En référence aux figures 5 à 7, on décrit maintenant une variante de l'organe pousseur. La figure 5 montre l'ensemble de formage et de banderolage 60' dans la même situation que la figure 4, dans laquelle le bloc 34 s'est déplacé vers le bas jusqu'à parvenir au niveau bas du positionnement de la banderole 27' à l'intérieur de la chambre de thermoformage 36'. Sur cette figure, on a notamment schématisé le mandrin 40', la chambre de thermoformage 36', la chambre d'enroulement 46' et le bloc de moule 34'. Ces éléments sont analogues à ceux des figures précédentes, sous réserve des différences exposées ci-après.

En l'espèce, la chambre 36' présente globalement une forme tronconique, en s'évasant depuis son fond 36'B vers son ouverture supérieure 36'A. Cette forme est légèrement différente de celle de la chambre 36 des figures précédentes, dont une portion est cylindrique.

Dans l'exemple de la figure 5, l'organe pousseur comprend une bague expansible 86 disposée dans une gorge annulaire 88 du mandrin 40'. On voit que, dans la position basse du bloc de moule 34', une partie supérieure de la bague 86 se trouve à l'intérieur de la chambre de thermoformage 36'. Cette partie supérieure s'est naturellement expansée pour porter le bord inférieur de la banderole 26A jusqu'au niveau souhaité dans la chambre. De même que dans la variante précédemment décrite, le mandrin 40' peut, de manière optionnelle, présenter un système d'aspiration (non représenté ici) servant à plaquer la banderole 27' enroulée dans la chambre 46', contre ce mandrin lors de la descente du bloc de moule 34'.

Sur les figures 6 et 7, on voit plus en détail la conformation de la bague expansible 86. La figure 6 montre sa forme alors qu'elle est contrainte par la paroi latérale de la chambre d'enroulement 46', par exemple dans une situation correspondant à celles des figures 4A, 4B, 4C ou encore 4E. On voit que, en l'espèce, la bague expansible 86 présente une portion annulaire en saillie interne 86A engagée dans un renfoncement annulaire 88A de la gorge 88. Ceci permet de caler axialement la bague par rapport à cette gorge. Par ailleurs, comme on le voit sur la figure 7, la bague 86 est fendue, ce qui permet à son diamètre d'augmenter ou de diminuer. Pour être sollicitée élastiquement dans le sens de son expansion, la bague 86 coopère avec des joints annulaires 89 en matériau élastique, disposés en l'espèce dans la gorge 88, de part et d'autre du renfoncement 88A. Ces joints sont ainsi coincés entre la périphérie interne de la bague 86 et le fond de la gorge 88 et ont ainsi un effet ressort rappelant la bague 86 dans le sens de son expansion radiale. Il ne s'agit bien entendu que d'un exemple de bague expansible. Ainsi, la bague 86 en elle-même peut être relativement souple pour que seule sa partie supérieure se déforme lorsque, lors de la descente du bloc de moule 34', elle parvient dans la chambre de thermoformage 36', alors que sa partie inférieure reste contrainte par la paroi de la chambre d'enroulement 46'. La bague 86 peut par ailleurs être formée ou revêtue en matériau anti usure pour coopérer sans usure prématurée avec le bord du passage annulaire 62' formé au fond de la chambre 36', lors des mouvements de montée et descente du bloc 34. Le bord radial externe de ce passage annulaire 62' peut être conformé en rampe, chanfreiné ou arrondi, pour favoriser le retour de la bague 86 en position rétractée lors de la remontée du moule, pour minimiser encore les risques d'usure.

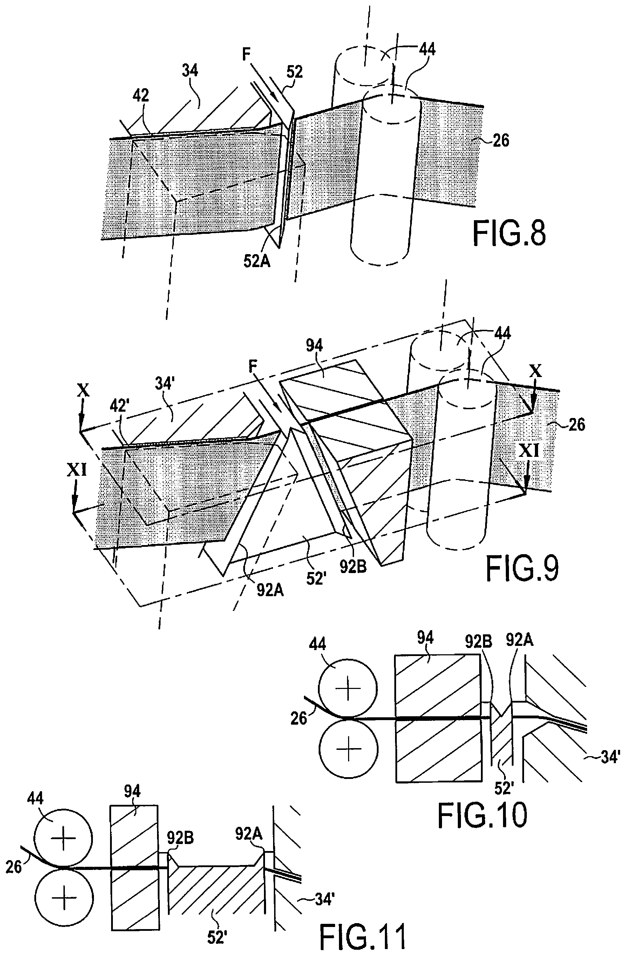

On décrit maintenant la figure 8, qui est une vue schématique en perspective selon la flèche VIII de la figure 3B. Sur cette figure, on voit deux galets d'entraînement 44 qui poussent la bandelette 26 dans la fente 42 du bloc de moule 34 (dont la partie située en avant de la fente est représentée en traits interrompus pour la clarté du dessin). Le couteau 52 dont l'arête 52A sert à découper la bandelette une fois qu'un tronçon suffisant a été introduit dans le bloc de moule 34 est également visible. Comme indiqué par la flèche f sur la figure 3B, ce couteau se déplace en translation contre la paroi du bloc 34 faisant office de contre-outil de découpe, pour couper la bandelette.

Dans l'exemple des figures 4A à 4E, la banderole 27 est disposée dans une région de la chambre de thermoformage 36 qui est cylindrique, c'est-à-dire dont les dimensions diamétrales sont constantes sur la hauteur. En revanche, dans l'exemple de la figure 5, la chambre de thermoformage 36' est tronconique, c'est-à-dire que ses dimensions diamétrales varient notamment dans la région dans laquelle la bandelette doit être disposée. Les figures 9 à 11 illustrent schématiquement la façon dont peut être réalisé l'outil de découpe de bandelettes dans ce cas de figure. La figure 9 correspond à la figure 8, et l'on reconnaît la bandelette 26, les galets 44 et la paroi du bloc de moule 34'. Cependant, dans la mesure où la banderole a vocation à être disposée autour d'une portion tronconique d'un récipient, ses dimensions diamétrales sont plus petites en région inférieure qu'en région supérieure.

On pourrait bien entendu, comme dans l'exemple de la figure 8, découper la bandelette parallèlement aux axes d'entraînement des galets 44, c'est-à-dire verticalement, avant de l'enrouler jusqu'à ce que ses deux bords verticaux se recouvrent en formant une surépaisseur à l'endroit de ce recouvrement.

Dans le cas où la banderole est mise en place dans une portion évasée d'une chambre, par exemple tronconique, on obtiendrait alors, si la bandelette est découpée droite, un recouvrement plus large en partie inférieure qu'en partie supérieure.

Pour éviter cela, il est proposé de découper les bandelettes en biais, à l'aide d'un couteau 52' qui, vu dans un plan vertical perpendiculaire à la direction de déplacement en va-et-vient du couteau, comme sur la figure 9, présente une forme en triangle. Sur la figure 9, une première arête 92A du couteau 52' définit le bord arrière de la banderole qui est en cours d'enroulement dans la chambre d'enroulement, tandis que la deuxième arête 92B de ce couteau définit le bord avant de la banderole suivante. EN l'espèce, ces deux arêtes sont rectilignes et inclinées de manière à définir un triangle isocèle. Bien entendu, la pente des arêtes 92A et 92B est définie en fonction du degré d'évasement de la portion de la chambre dans laquelle sera disposée la banderole. En particulier, cet angle peut correspondre au demi-angle du tronc de cône formé par la chambre.

Pour l'arête 92A, le bloc 34' contre la paroi duquel cette arête se déplace lors de la découpe peut faire office de contre-outil. Pour l'autre arête 92B, un contre-outil supplémentaire 94 est disposé de l'autre côté du couteau 52'. En comparant les figures 10 et 11, on voit que l'épaisseur du couteau 52' et l'espace entre le contre-outil 94 et la paroi opposée du bloc 34' varient selon la hauteur.

## Revendications

1. Dispositif pour fabriquer des récipients pourvus de banderoles de décor, le dispositif comprenant au moins un ensemble de formage et de banderolage (60 ; 60') apte à adopter une configuration active dans laquelle ledit ensemble présente une chambre de formage (36 ;36') et une chambre d'enroulement (46 ; 46'), alignées axialement et communiquant par un passage annulaire (62 ; 62') formé au fond (36B) de la chambre de formage, ce fond étant opposé à une ouverture de formage (36A) de la chambre de thermoformage, l'ensemble de formage et de banderolage comprenant un organe pousseur (66 ; 86) configuré pour repousser dans la chambre de formage, à travers le passage annulaire, une banderole enroulée dans la chambre d'enroulement, **caractérisé en ce qu'** au moins une portion (36C' ; 36') de la chambre de formage (36 ; 36') est évasée en s'éloignant du fond (36B ; 36'B) vers l'ouverture de formage (36A ; 36'A) et **en ce que**
l'organe pousseur (66 ; 86) est configuré pour s'expanser radialement en repoussant la banderole (26A) dans ladite portion évasée (36C' ; 36') de la chambre de formage (36 ; 36').

2. Dispositif selon la revendication 1, dans lequel l'organe pousseur (66 ; 86) présente une surface de poussée transversale à l'axe d'alignement de la chambre de formage et de la chambre d'enroulement, cette surface étant configurée pour porter un bord de la banderole pour repousser la banderole dans la chambre de formage.

3. Dispositif selon la revendication 1 ou 2, dans lequel l'organe pousseur (66 ; 86) comprend un moyen élastique (70 ; 89) sollicitant en permanence ledit organe pousseur (66 ; 86) dans le sens de son expansion radiale et dans lequel, dans la configuration active de l'ensemble de formage et de banderolage (60 ; 60'), ledit organe pousseur est contraint en compression radiale par la paroi latérale de la chambre d'enroulement à l'encontre de l'effet de rappel dudit moyen élastique.

4. Dispositif selon l'une quelconque des revendications 1 à 3, dans lequel l'ensemble de formage et de banderolage (60 ; 60') comprend un noyau conformateur (40 ; 40') qui porte l'organe pousseur (66 ; 86) et qui, dans la configuration active, délimite un espace annulaire d'enroulement (46A ; 46'A) avec la paroi en regard de la chambre d'enroulement (46 ; 46'), le noyau conformateur et la paroi latérale de la chambre de formage étant aptes à être déplacés axialement l'un par rapport à l'autre pour repousser la banderole dans la chambre de formage.

5. Dispositif selon l'une quelconque des revendications 1 à 4, dans lequel l'organe pousseur comprend une bague expansible (86).

6. Dispositif selon la revendication 5 prise en combinaison avec la revendication 3, dans lequel la bague expansible (86) comprend un anneau fendu.

7. Dispositif selon l'une quelconque des revendications 1 à 4, dans lequel l'organe pousseur comprend une pluralité de doigts pousseurs (66).

8. Dispositif selon la revendication 7, dans lequel les doigts pousseurs (66) sont portés par un support commun (40) en étant aptes à se déplacer radialement par rapport audit support commun.

9. Dispositif selon la revendication 8, dans lequel les doigts pousseurs (66) sont montés pivotants sur le support commun (40).

10. Dispositif selon l'une quelconque des revendications 7 à 9, dans lequel les doigts pousseurs (66) coopèrent avec des ressorts (70) sollicitant lesdits doigts radialement vers l'extérieur.

11. Dispositif selon l'une quelconque des revendications 8 à 10, prise en combinaison avec la revendication 4, dans lequel les doigts pousseurs (66) sont portés par le noyau conformateur (40).

12. Dispositif selon l'une quelconque des revendications 1 à 11, dans lequel au moins l'un des éléments comprenant l'organe pousseur (66 ; 86) et le passage annulaire (62) présente une rampe de rentrée (66B) apte, lorsque l'organe pousseur coopère avec le bord radial externe dudit passage annulaire (62) à l'occasion d'un déplacement relatif de l'organe pousseur et de la paroi de la chambre de formage en sens opposé au sens de poussée de la banderole dans la chambre de formage, à solliciter ledit organe pousseur à l'encontre de son expansion.

## Patentansprüche

1. Vorrichtung zur Herstellung von Behältern, die mit Dekorbanderolen versehen sind, wobei die Vorrichtung mindestens eine Form- und Banderolierungsanordnung (60; 60') umfasst, die dazu ausgelegt ist, eine aktive Konfiguration anzunehmen, in der die Anordnung eine Formkammer (36; 36') und eine Wickelkammer (46; 46') aufweist, die axial ausgerichtet sind und durch einen ringförmigen Durchgang (62; 62') kommunizieren, der am Boden (36B) der Formkammer gebildet ist, wobei dieser Boden einer Formöffnung (36A) der Thermoformkammer gegenüberliegt, wobei die Form- und Banderolierungsanordnung ein Schieberorgan (66; 86) umfasst, das dazu ausgelegt ist, eine in der Wickelkammer aufgewickelte Banderole quer durch den ringförmigen Durchgang in die Formkammer zu schieben,
**dadurch gekennzeichnet, dass** mindestens ein Abschnitt (36C'; 36') der Formkammer (36; 36') aufgeweitet ist, indem er sich von dem Boden (36B; 36'B) zu der Formöffnung (36A; 36'A) entfernt, und dadurch, dass das Schieberorgan (66; 86) dazu ausgelegt ist, sich beim Schieben der Banderole (26A) in den genannten aufgeweiteten Abschnitt (36C'; 36') der Formkammer (36; 36') radial auszudehnen.

2. Vorrichtung nach Anspruch 1, wobei das Schieberorgan (66; 86) eine Schiebefläche quer zur Ausrichtungsachse der Formkammer und der Wickelkammer aufweist, wobei diese Fläche dazu ausgelegt ist, um einen Rand der Banderole zu tragen, um die Banderole in die Formkammer zu schieben.

3. Vorrichtung nach Anspruch 1 oder 2, wobei das Schieberorgan (66; 86) ein elastisches Mittel (70; 89) umfasst, das permanent das genannte Schieberorgan (66; 86) in die Richtung seiner radialen Expansion drückt, und wobei das genannte Schieberorgan in der aktiven Konfiguration der Form- und Banderolierungsanordnung (60; 60') unter radialem Druck durch die laterale Wand der Wickelkammer gegen den Rückholeffekt des genannten elastischen Mittels gehalten wird.

4. Vorrichtung nach einem der Ansprüche 1 bis 3, wobei die Form- und Banderolierungsanordnung (60; 60') einen Formerkern (40; 40') umfasst, der das Schieberorgan (66; 86) trägt und der in der aktiven Konfiguration einen ringförmigen Wickelraum (46A; 46A') mit der Wand gegenüber der Wickelkammer (46; 46') begrenzt, wobei der Formerkern und die laterale Wand der Formkammer dazu ausgelegt sind, axial in Bezug aufeinander verschoben zu werden, um die Banderole in die Formkammer zu schieben.

5. Vorrichtung nach einem der Ansprüche 1 bis 4, wobei das Schieberorgan einen expandierbaren Ring (86) umfasst.

6. Vorrichtung nach Anspruch 5 in Kombination mit Anspruch 3, wobei der expandierbare Ring (86) einen geschlitzten Ring umfasst.

7. Vorrichtung nach einem der Ansprüche 1 bis 4, wobei das Schieberorgan eine Vielzahl von Schieberfingern (66) umfasst.

8. Vorrichtung nach Anspruch 7, wobei die Schieberfinger (66) durch eine gemeinsame Stütze (40) getragen werden, indem sie dafür geeignet sind, sich radial in Bezug auf die genannte gemeinsame Stütze zu verschieben.

9. Vorrichtung nach Anspruch 8, wobei die Schieberfinger (66) schwenkbar auf der gemeinsamen Stütze (40) montiert sind.

10. Vorrichtung nach einem der Ansprüche 7 bis 9, wobei die Schieberfinger (66) mit Federn (70) zusammenwirken, welche die genannten Finger radial nach außen drücken.

11. Vorrichtung nach einem der Ansprüche 8 bis 10 in Kombination mit Anspruch 4, wobei die Schieberfinger (66) von dem Formerkern (40) getragen werden.

12. Vorrichtung nach einem der Ansprüche 1 bis 11, wobei mindestens das eine der Elemente, die das Schieberorgan (66; 86) und den ringförmigen Durchgang (62) umfassen, eine Rückkehrrampe (66B) aufweist, die dazu ausgelegt ist, wenn das Schieberorgan mit dem äußeren radialen Ring des genannten ringförmigen Durchgangs (62) bei einer relativen Verschiebung des Schieberorgans und der Wand der Formkammer in der Richtung entgegengesetzt zur Schieberichtung der Banderole in der Formkammer zusammenwirkt, das genannte Schieberorgan gegen seine Expansion zu drücken.

## Claims

1. A device for manufacturing containers provided with decorative wrap-around labels or "banderoles", the device comprising at least one forming and wrap-around labeling assembly (60; 60') suitable for taking up an active configuration in which said assembly has a forming chamber (36; 36') and a looping chamber (46; 46'), which chambers are in axial alignment and communicate with each other via an annular passageway (62; 62') provided through the end wall (36B) of the forming chamber, which end wall is opposite from a forming opening (36A) in the thermoforming chamber, the forming and wrap-around labeling assembly further being provided with a pusher member (66; 86) configured to push a wrap-around label that is looped in the looping chamber into the forming chamber through the annular passageway;
**characterized in that** at least one portion (36C'; 36') of the forming chamber (36; 36') flares going away from the end wall (36B; 36'B) towards the forming opening (36A; 36'A) and **in that** the pusher member (66; 86) is configured to expand radially while pushing the wrap-around label (26A) into said flared portion (36C'; 36') of the forming chamber (36; 36').

2. A device according to claim 1, wherein the pusher member (66; 86) has a pushing surface that extends transversely to the axis of alignment of the forming chamber and of the looping chamber, which surface is configured to carry an edge of the wrap-around label so as to push the wrap-around label into the forming chamber.

3. A device according to claim 1 or claim 2, wherein the pusher member (66; 86) includes resilient means (70; 89) urging said pusher member (66; 86) continuously in the direction in which it expands radially, and wherein, when the forming and wrap-around labeling assembly (60; 60') is in the active configuration, said pusher member is constrained in radial compression by the side wall of the looping chamber against the return urging effect of said resilient means.

4. A device according to any one of claims 1 to 3, wherein the forming and wrap-around labeling assembly (60; 60') further comprises a shaping core (40; 40') that carries the pusher member (66; 86) and that, in the active configuration, co-operates with the facing wall of the looping chamber (46; 46') to define an annular looping space (46A; 46'A), the shaping core and the side wall of the forming chamber being suitable for being moved axially relative to each other so as to push the wrap-around label into the forming chamber.

5. A device according to any one of claims 1 to 4, wherein the pusher member comprises an expandable ring (86) .

6. A device according to claim 5, taken in combination with claim 3, wherein the expandable ring (86) comprises a split ring.

7. A device according to any one of claims 1 to 4, wherein the pusher member comprises a plurality of pusher fingers (66).

8. A device according to claim 7, wherein the pusher fingers (66) are carried by a common support (40) while being suitable for moving radially relative to said common support.

9. A device according to claim 8, wherein the pusher fingers (66) are mounted to pivot on the common support (40) .

10. A device according to any one of claims 7 to 9, wherein the pusher fingers (66) co-operate with springs (70) urging said fingers radially outwards.

11. A device according to any one of claims 8 to 10, taken in combination with claim 4, wherein the pusher fingers (66) are carried by the shaping core (40).

12. A device according to any one of claims 1 to 11, wherein at least one of the elements comprising the pusher member (66; 86) and the annular passageway (62) has a retractor ramp (66B) that, when the pusher member comes to co-operate with the radially outer edge of said annular passageway (62) while the pusher member and the wall of the forming chamber are moving relative to each other in the direction opposite from the direction in which the wrap-around label is pushed into the forming chamber, is suitable for urging said pusher member in the direction opposite from the direction in which it expands.
